# EUROPÄISCHE PATENTSCHRIFT

(11) **EP 3 600 738 B1**
(45) Veröffentlichungstag und Bekanntmachung des Hinweises auf die Patenterteilung: **05.05.2021**
(21) Anmeldenummer: 18710042.5
(22) Anmeldetag: 08.03.2018
(51) Int. Cl.: B23B 51/02

(54) **BOHRWERKZEUG**
DRILLING TOOL
OUTIL DE PERÇAGE

(30) Priorität: 22.03.2017 AT 6017 U
(43) Veröffentlichungstag der Anmeldung: 05.02.2020
(73) Patentinhaber: CERATIZIT Balzheim GmbH & Co. KG, 88481 Balzheim (DE)
(72) Erfinder: WALCHER, Rainer, 88481 Balzheim (DE); WALCHER, Jochen, 88481 Balzheim (DE); WALCHER, Matthias, 88481 Balzheim (DE); RAPP, Oliver, 88481 Balzheim (DE)
(74) Vertreter: Ciesla, Dirk
(86) Internationale Anmeldenummer: PCT/EP2018/055786
(87) Internationale Veröffentlichungsnummer: WO 2018/172097

(56) Entgegenhaltungen:
- WO-A1-97/03792
- DE-A1-102012 002 050
- DE-A1-102012 112 781
- FR-A- 1 274 316

## Beschreibung

Die Erfindung betrifft ein Bohrwerkzeug, insbesondere Spiralbohrer, mit den Merkmalen des Oberbegriffs von Anspruch 1.
Ein derartiges Bohrwerkzeug geht beispielsweise aus der DE 10 2012 112 781 A1 hervor.

Gattungsgemäße Bohrwerkzeuge weisen einen Schaftabschnitt und einen Schneidenabschnitt auf. Der Schneidenabschnitt trägt in der Regel zwei wendelförmige Spannuten, die zum Abtransport von Spänen dienen und eine Zufuhr von Kühl- bzw. Schmiermittel an den Bohrgrund erlauben.
Zwischen Spannuten liegt jeweils ein Steg, dessen Mantelfläche einen Schneidrücken bildet.
Es ist bekannt, am Schneidrücken Führungsfasen auszubilden, die gegenüber einer Bohrerlängsachse einen vom Drallwinkel der Spannuten abweichenden Neigungswinkel aufweisen, wodurch diese Führungsfasen als Ringe bzw. Ringsegmente am Schneidrücken ausgeprägt sind.
So zeigt beispielsweise die FR1274316 ein solches Bohrwerkzeug mit ringförmigen Führungsfasen.
Nachteilig an Führungsringen ist allerdings, dass Späne zwischen Schneidrücken und Bohrloch eingezogen werden können.
Ferner ist es bekannt, Bohrwerkzeuge mit innenliegenden Kühlkanälen auszustatten. Über meist solche verdrallt verlaufende Kühlkanäle kann Kühl- und / oder Schmiermittel direkt an die Hauptschneiden gefördert werden. Aufgabe der vorliegenden Erfindung ist es, ein verbessertes Bohrwerkzeug anzugeben.
Gelöst wird diese Aufgabe durch ein Bohrwerkzeug mit den Merkmalen von Anspruch 1. Vorteilhafte Weiterbildungen sind in den abhängigen Ansprüchen angegeben.

Indem an wenigstens einem Schneidrücken zusätzlich zu den Führungsringen wenigstens eine parallel zum Drallwinkel und bezüglich der Drehrichtung des Bohrwerkzeugs vor den Führungsringen verlaufende Führungsfase ausgebildet ist, wird ein Einziehen von Spänen zwischen Schneidrücken und Bohrloch verhindert. Zudem wird gegenüber dem Stand der Technik, nach welchem die Führungsringe bis an die Nebenschneide reichen, ein wesentlich sauberer Schnitt erzeugt. Reichen die Führungsringe nämlich bis an die Nebenschneide, weist die Nebenschneide eine gezahnte Kontur auf. Bei einem Bohrwerkzeug gemäß der Erfindung treten die Führungsringe nicht in einen schneidenden Eingriff. Durch die erfindungsgemäß nicht-gezahnte Nebenschneide erfolgt ein glatter Schnitt.

Der Begriff "Führungsringe" bedeutet nicht, dass es sich um geschlossene Ringe im geometrischen Sinn handelt, vielmehr handelt es sich um Ringsegmente, die an den Schneidrücken verlaufen.
"Parallel zum Drallwinkel verlaufend" bedeutet, dass die Führungsfase parallel zu einer Schneide entlang des Schneidrückens verläuft.

Bevorzugt ist vorgesehen, dass die Führungsfase von den Führungsringen von einer parallel zur Führungsfase verlaufenden Nut beabstandet ist. Neben fertigungstechnischen Vorteilen wird durch eine solche Nut die Möglichkeit geschaffen, Kühl- bzw. Schmiermittel von einem Bohrerkopf an die Führungsringe zu transportieren. Dies bewirkt eine verringerte Reibung des Bohrwerkzeugs in einem Bohrloch.

Günstig ist es vorzusehen, dass die Führungsringe bezüglich der Bohrerlängsachse entlang eines Führungsabschnitts ausgebildet sind, dessen Länge wenigstens das Doppelte des Bohrerdurchmessers beträgt. Es hat sich für eine gute Führung des Bohrwerkzeugs als vorteilhaft herausgestellt, die Führungsringe wenigstens über diese Strecke hinweg auszubilden.
Bevorzugt ist die Länge des Führungsabschnitts kleiner oder gleich das Fünffache des Bohrerdurchmessers. Darüber hinaus bringt das Ausbilden von Führungsringen keinen Vorteil, zumal das Bohrwerkzeug in der Regel eine Verjüngung in Richtung eines Einspannabschnitts aufweist.

Bevorzugt ist der Winkel der Führungsringe zur Bohrerlängsachse größer als der Drallwinkel des Bohrwerkzeugs. Dies ist unter anderem auch hinsichtlich der Reibung vorteilhaft, weil dadurch die Länge der Führungsringe verkürzt wird.
Bevorzugt verlaufen die Führungsringe in einem Winkel von ≥ 80° zur Bohrerlängsachse, weiter bevorzugt ≤ 90°, besonders bevorzugt 90° zur Bohrerlängsachse. Hier ergibt sich eine besonders gute Führung des Bohrwerkzeugs bei geringer Reibung. Fertigungstechnisch sind 90° besonders einfach zu realisieren. Außerdem hat sich gezeigt, dass bei 90° Kühl- bzw. Schmiermittel mit besonders geringem Widerstand in den Führungsringen transportiert wird. Günstig an einem Winkel von ≥ 80° zur Bohrerlängsachse, weiter bevorzugt ≤ 90°, besonders bevorzugt 90° ist es, dass das Kühl- bzw. Schmiermittel tendenziell in einem vorderen (arbeitsseitigen) Bereich des Bohrers gehalten wird, wo gute Kühlung und Schmierung besonders wichtig sind.

Bevorzugt sind die Führungsringe so ausgebildet, dass eine Profilbreite der Führungsringe zwischen 20% und 40% einer Profileinheit beträgt.
Unter Profilbreite wird die Breite eines Führungsringes am (Nenn)durchmesser des Bohrwerkzeugs verstanden, also jene Breite eines Führungsringes, zu welcher der Führungsring am Bohrloch anliegt.
Unter Profileinheit wird die kleinste Wiederholungseinheit des von den Führungsringen gebildeten Profils verstanden, gebildet vom eigentlichen erhabenen Führungsring und einer daran anschließenden Ringnut.
Wenn die Profilbreite der Führungsringe zwischen 20% und 40% einer Profileinheit beträgt, wird ein besonders ausgewogenes Verhältnis von Führung und Reibung erzielt. In anderen Worten stehen dann zwischen 20% und 40% jener Mantelfläche des Bohrwerkzeugs, an welcher Führungsringe ausgebildet sind im Kontakt mit dem Bohrloch.

Bevorzugt ist vorgesehen, dass im Bohrwerkzeug wenigstens ein innenliegender Kühlkanal ausgebildet ist. In der Regel liegt der Kühlkanal in einem Steg und folgt dem Drallwinkel des Bohrwerkzeugs. Damit wird die Möglichkeiten geschaffen, Kühl- bzw. Schmiermittel an den Bohrerkopf zu fördern. Besonders vorteilhaft kann in Kombination mit oben genannter Nut zwischen den Führungsringen und Führungsfase nun Kühl- bzw. Schmiermittel an die Führungsringe transportiert werden.

Die Erfindung wird im Folgenden durch Figuren näher erläutert. Dabei zeigt:
- Fig. 1: ein Bohrwerkzeug der Erfindung
- Fig. 2: ein Detail des Bohrwerkzeugs
- Fig. 3: eine Stirnansicht des Bohrwerkzeugs
- Fig. 4: Führungsringe im Detail
- Fig. 5: ein Bohrwerkzeug in einem weiteren Ausführungsbeispiel

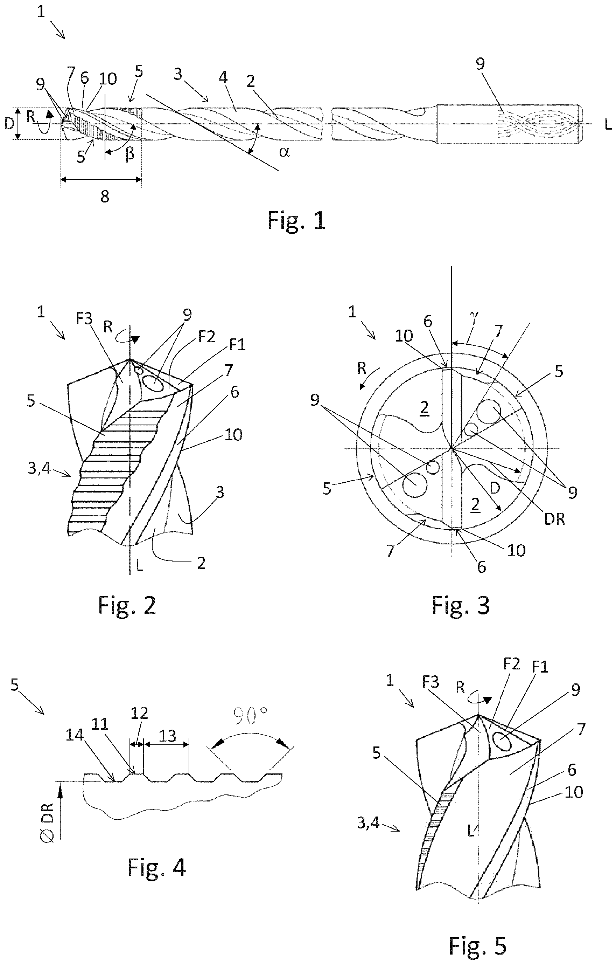

Figur 1 zeigt ein Bohrwerkzeug 1 in einem ersten Ausführungsbeispiel. Das Bohrwerkzeug 1 hat einen Bohrerdurchmesser D und ist für einen Betrieb in einer Drehrichtung R vorgesehen. Das vorliegende Bohrwerkzeug 1 ist also rechtsdrehend. Die Erfindung kann natürlich auch auf linksdrehende Werkzeuge angewendet werden.
Das Bohrwerkzeug 1 weist in einem Drallwinkel α zu einer Bohrerlängsachse L verdrallt verlaufende Spannuten 2 und zwischen den Spannuten 2 stehende Stege 3 auf. Eine äußere Mantelfläche der Stege 3 bildet den Schneidrücken 4. Entlang eines Führungsabschnittes 8 sind am Schneidrücken 4 Führungsringe 5 ausgebildet. Die Führungsringe 5 verlaufen in einem Winkel β zur Bohrerlängsachse L. Der Winkel β der Führungsringe 5 ist größer als der Drallwinkel α und beträgt in dem vorliegenden Ausführungsbeispiel genau 90°. Der Drallwinkel α misst in dem vorliegenden Ausführungsbeispiel 30°.
Die Winkel werden zwischen einer Tangente an den Schneidrücken 4 und der Bohrerlängsachse L bzw. zwischen einer Tangente an einen Führungsring 5 und der Bohrerlängsachse L bestimmt, wie es in der Figur gezeigt ist.
In einem Bohrloch (nicht gezeigt) kann sich das Bohrwerkzeug 1 an den Führungsringen 5 abstützen. Hinsichtlich Reibung ist eine Abstützung über Führungsringe 5 bei gleich guter Abstützwirkung und Führung günstiger als eine vollflächige Abstützung am Schneidrücken 4.

Die Länge des Führungsabschnittes 8 beträgt bevorzugt wenigstens das Doppelte des Bohrerdurchmessers D und ist bevorzugt kleiner oder gleich das Fünffache des Bohrerdurchmessers D.
Im vorliegenden Ausführungsbeispiel ist zwischen einer Nebenschneide 10 und de Führungsringen 5 eine Führungsfase 6 ausgebildet. Diese Führungsfase 6 verhindert, dass Späne zwischen Bohrloch und Schneidrücken 4 eingezogen werden. Ferner ist zwischen der Führungsfase 6 und den Führungsringen 5 eine Nut 7 vorgesehen. Durch diese Nut 7 kann Kühl- bzw. Schmiermittel vom Bohrerkopf an die Führungsringe 5 geleitet werden. Dadurch ergibt sich eine verringerte Reibung zwischen den Führungsringen 5 und dem Bohrloch.
Das Bohrwerkzeug 1 weist hier außerdem noch innenliegende Kühlkanäle 9 auf, die in den Stegen 3 verlaufen und am Bohrerkopf austreten. Durch diese Maßnahme kann die Zufuhr von Kühl- bzw. Schmiermittel an den Bohrerkopf und in weiterer Folge an die Führungsringe 5 besonders vorteilhaft realisiert werden.

Figur 2 zeigt einen vorderen Abschnitt des Bohrwerkzeugs 1 im Detail in einer Seitenansicht. Die vorgesehene Drehrichtung R ist wieder durch einen Pfeil angedeutet.
An Schneidrücken 4 sind Führungsringe 5 ausgebildet. Zwischen der Führungsfase 6 und den Führungsringen 5 ist die Nut 7 ausgebildet.
Die Führungsfase 6 verläuft entlang (parallel) zur Nebenschneide 10.
Man erkennt Austrittsöffnungen der Kühlkanäle 9 an einem arbeitsseitigen Ende des Bohrwerkzeugs 1 (am Bohrerkopf). Unter arbeitsseitigem Ende wird die bei einer Bearbeitung einem Werksstück zugewandte Richtung verstanden.
So kann auf besonders vorteilhafte Weise Kühl- bzw. Schmiermittel über die Nut 7 an die Führungsringe 5 transportiert werden. Weiters dargestellt sind eine erste Freifläche F1, eine zweite Freifläche F2 und eine dritte Freifläche F3 der Stirn. Die Führungsringe 5 setzen im vorliegenden Ausführungsbeispiel in der zweiten Freifläche F2 an.

Figur 3 zeigt eine Stirnansicht des Bohrwerkzeugs 1.
Bezüglich der Drehrichtung R hinter oder nach den Nebenschneiden 10 ist die Führungsfase 6 ausgebildet. Diese verhindert, dass Späne zwischen den Schneidrücken 4 bzw. die am Schneidrücken 4 ausgebildeten Führungsringe 5 und das Bohrloch eingezogen werden. Zwischen der Führungsfase 6 und den Führungsringen 5 ist die Nut 7 ausgebildet. Das Bohrwerkzeug 1 weist einen Bohrerdurchmesser D und einen Rückendurchmesser DR auf. Die Nut 7 reicht an den Rückendurchmesser DR. Die Nut 7 erstreckt sich über einen Nutwinkel γ von hier rund 30°. Damit ist ein genügend großer Nutquerschnitt geschaffen, um einen Transport von Kühl- bzw. Schmiermittel an die Führungsringe 5 zu gewährleisten. Über Austrittsöffnungen der Kühlkanäle 9 kann Kühl- bzw. Schmiermittel austreten und über die Nut 7 an die Führungsringe 5 transportiert werden. Der Führungsringe 5 tragende Teil des Schneidrückens 4 erstreckt sich über einen Winkelbereich von etwa 90°, wodurch eine sehr gute Führung des Bohrwerkzeugs 1 erzielt wird.

In dem obig diskutierten Ausführungsbeispiel sind jeweils zwei Spannuten 2 und entsprechend zwei Spiralstege 3 ausgebildet. Die Erfindung ist selbstverständlich nicht auf diese Anzahl von Spannuten bzw. Spiralstegen beschränkt.

Figur 4 zeigt ein Profil der Führungsringe 5 in einem Querschnitt entlang der Längsachse L des Bohrwerkzeugs 1.
Im Detail umfassen die Führungsringe 5 eine Führungsfläche 11 mit einer Profilbreite 12, welche Führungsfläche 11 den mit dem Bohrloch in Kontakt stehenden Teil eines Führungsrings 5 bildet, und eine hier trapezförmige Ringnut 14, welche bis auf den Rückendurchmesser DR des Bohrwerkzeugs 1 reicht.
Bevorzugt sind die Führungsringe 5 so ausgebildet sind, dass die Profilbreite 12 der Führungsringe 5 zwischen 20% und 40% der Breite einer Profileinheit 13 beträgt. Die Profileinheit 13 ist die kleinste Wiederholungseinheit des von den Führungsringen 5 gebildeten Profils.
Wenn die Profilbreite 12 der Führungsringe zwischen 20% und 40% einer Profileinheit 13 beträgt, wird ein besonders ausgewogenes Verhältnis von Führung und Reibung erzielt.

Figur 5 zeigt ein Bohrwerkzeugs 1 in einem weiteren Ausführungsbeispiel in einer Seitenansicht. Die Führungsringe 5 sind hier in einem schmalen Segment des Schneidrückens 4 ausgebildet. Der die Führungsringe 5 tragende Teil des Schneidrückens 4 setzt erst bei einer dritten Freifläche F3 der Stirn an. Die Nut 7 hingegen ist sehr breit und überstreicht den größten Teil des Schneidrückens 4. Im Vergleich dazu setzen die Führungsringe 5 im Ausführungsbeispiel von Figur 2 schon in einer zweiten Freifläche F2 an.
In einer Stirnansicht analog zu Figur 3 würde sich für dieses Ausführungsbeispiel ein Nutwinkel γ von rund 90° ergeben, während sich der Führungsringe 5 tragende Teil des Schneidrückens 4 nur über einen kleinen Winkelbereich von beispielsweise 20-30° erstreckt. Das Ausführungsbeispiel soll zeigen, dass die Winkelverhältnisse (bezüglich einer Stirnansicht), über die sich die Nut 7 und die Führungsringe 5 erstrecken, sehr unterschiedlich sein können. Im vorliegenden Ausführungsbeispiel setzt die Führung durch die Führungsringe 5 erste relativ spät - nämlich bei der dritten Freifläche F3 - ein, dafür ist die von den Führungsringen 5 verursachte Reibung besonders gering.

### Liste der verwendeten Bezugszeichen:

- 1: Bohrwerkzeug
- 2: Spannut
- 3: Spiralsteg
- 4: Schneidrücken
- 5: Führungsring
- 6: Führungsfase
- 7: Nut
- 8: Führungsabschnitt
- 9: Kühlkanal
- 10: Nebenschneide
- 11: Führungsfläche
- 12: Profilbreite
- 13: Profileinheit
- 14: Ringnut
- F1, F2, F3: Freiflächen
- L: Bohrerlängsachse
- D: Bohrerdurchmesser
- DR: Rückendurchmesser
- R: Drehrichtung

## Patentansprüche

1. Bohrwerkzeug (1), insbesondere Spiralbohrer, mit:
- einer Bohrerlängsachse (L),
- wenigstens zwei gegenüber der Bohrerlängsachse (L) in einem Drallwinkel (α) verdrallt verlaufenden Spannuten (2),
- zwischen den Spannuten (2) ausgebildeten Stegen (3),
- an einer Mantelfläche der Stege (3) ausgebildeten Schneidrücken (4), auf welchen Schneidrücken (4) zumindest abschnittsweise in einem vom Drallwinkel (α) abweichenden Winkel (β) zur Bohrerlängsachse (L) verlaufende Führungsringe (5) ausgebildet sind,
**dadurch gekennzeichnet, dass** an wenigstens einem Schneidrücken (4) zusätzlich zu den Führungsringen (5) wenigstens eine parallel zum Drallwinkel (α) und bezüglich der Drehrichtung (R) des Bohrwerkzeugs (1) vor den Führungsringen (5) verlaufende Führungsfase (6) ausgebildet ist.

2. Bohrwerkzeug (1) nach Anspruch 1, wobei die Führungsfase (6) von den Führungsringen (5) von einer parallel zur Führungsfase (6) verlaufenden Nut (7) beabstandet ist.

3. Bohrwerkzeug (1) nach Anspruch 1 oder 2, wobei die Führungsringe (5) bezüglich der Bohrerlängsachse (L) entlang eines Führungsabschnitts (8) ausgebildet sind, dessen Länge wenigstens das Doppelte des Bohrerdurchmessers (D) beträgt.

4. Bohrwerkzeug (1) nach einem der vorangegangenen Ansprüche, wobei die Länge des Führungsabschnitts (8) kleiner oder gleich das Fünffache des Bohrerdurchmessers (D) beträgt.

5. Bohrwerkzeug (1) nach einem der vorangegangenen Ansprüche, wobei der Winkel (β) der Führungsringe (5) zur Bohrerlängsachse (L) größer ist als der Drallwinkel (α).

6. Bohrwerkzeug (1) nach einem der vorangegangenen Ansprüche, wobei die Führungsringe (5) in einem Winkel (β) von ≥ 80° zur Bohrerlängsachse (L) verlaufen.

7. Bohrwerkzeug (1) nach Anspruch 6, wobei der Winkel (β) der Führungsringe (5) zur Bohrerlängsachse (L) ≤ 90°, besonders bevorzugt 90° beträgt.

8. Bohrwerkzeug (1) nach einem der vorangegangenen Ansprüche, wobei die Führungsringe (5) so ausgebildet sind, dass eine Profilbreite (12) der Führungsringe (5) zwischen 20% und 40% der Länge einer Profileinheit (13) beträgt.

9. Bohrwerkzeug (1) nach einem der vorangegangenen Ansprüche, wobei im Bohrwerkzeug (1) wenigstens ein innenliegender Kühlkanal (9) ausgebildet ist.

## Claims

1. A drilling tool (1), in particular a spiral drill, having:
- a drill longitudinal axis (L),
- at least two flutes (2) extending in a manner twisted at a twist angle (α) with respect to the drill longitudinal axis (L),
- webs (3) formed between the flutes (2),
- lands (4) formed on a lateral surface of the webs (3), on which lands (4) guide rings (5) that extend at an angle (β) other than the twist angle (α) to the drill longitudinal axis (L) are formed at least partially,
**characterized in that** at least one guide land (6) extending parallel to the twist angle (α) and in front of the guide rings (5) with respect to the direction of rotation (R) of the drilling tool (1) is formed on at least one land (4), in addition to the guide rings (5).

2. The drilling tool (1) as claimed in claim 1, wherein the guide land (6) is spaced apart from the guide rings (5) by a groove (7) extending parallel to the guide land (6).

3. The drilling tool (1) as claimed in claim 1 or 2, wherein the guide rings (5) are formed along a guide portion (8) with respect to the drill longitudinal axis (L), the length of said guide portion (8) being at least twice the drill diameter (D).

4. The drilling tool (1) as claimed in one of the preceding claims, wherein the length of the guide portion (8) is less than or equal to five times the drill diameter (D).

5. The drilling tool (1) as claimed in one of the preceding claims, wherein the angle (β) of the guide rings (5) to the drill longitudinal axis (L) is greater than the twist angle (α).

6. The drilling tool (1) as claimed in one of the preceding claims, wherein the guide rings (5) extend at an angle (β) of ≥ 80° to the drill longitudinal axis (L).

7. The drilling tool (1) as claimed in claim 6, wherein the angle (β) of the guide rings (5) to the drill longitudinal axis (L) is ≤ 90°, particularly preferably 90°.

8. The drilling tool (1) as claimed in one of the preceding claims, wherein the guide rings (5) are formed such that a profile width (12) of the guide rings (5) is between 20% and 40% of the length of a profile unit (13).

9. The drilling tool (1) as claimed in one of the preceding claims, wherein at least one internal coolant passage (9) is formed in the drilling tool (1).

## Revendications

1. Outil de perçage (1), en particulier foret hélicoïdal, comprenant :
- un axe longitudinal de foret (L),
- au moins deux goujures (2) s'étendant en torsade suivant un angle de torsion (α) par rapport à l'axe longitudinal de foret (L),
- des nervures (3) réalisées entre les goujures (2),
- une face de coupe (4) réalisée sur une surface d'enveloppe des nervures (3), sur laquelle face de coupe (4) sont réalisées des bagues de guidage (5) s'étendant au moins en partie suivant un angle (β) s'écartant de l'angle de torsion (α) par rapport à l'axe longitudinal de foret (L),
**caractérisé en ce qu'**au moins un biseau de guidage (6) s'étendant parallèlement à l'angle de torsion (α) et, par rapport au sens de rotation (R) de l'outil de perçage (1), devant les bagues de guidage (5), est réalisé au niveau d'au moins une face de coupe (4) en plus des bagues de guidage (5) .

2. Outil de perçage (1) selon la revendication 1, dans lequel le biseau de guidage (6) est espacé des bagues de guidage (5) par une rainure (7) s'étendant parallèlement au biseau de guidage (6).

3. Outil de perçage (1) selon la revendication 1 ou 2, dans lequel les bagues de guidage (5) sont réalisées par rapport à l'axe longitudinal de foret (L) le long d'une portion de guidage (8) dont la longueur vaut au moins le double du diamètre du foret (D).

4. Outil de perçage (1) selon l'une quelconque des revendications précédentes, dans lequel la longueur de la portion de guidage (8) est inférieure ou égale à cinq fois le diamètre du foret (D).

5. Outil de perçage (1) selon l'une quelconque des revendications précédentes, dans lequel l'angle (β) des bagues de guidage (5) par rapport à l'axe longitudinal de foret (L) est supérieur à l'angle de torsion (α).

6. Outil de perçage (1) selon l'une quelconque des revendications précédentes, dans lequel les bagues de guidage (5) s'étendent suivant un angle (β) ≥ 80° par rapport à l'axe longitudinal de foret (L).

7. Outil de perçage (1) selon la revendication 6, dans lequel l'angle (β) des bagues de guidage (5) par rapport à l'axe longitudinal de foret (L) est ≤ 90°, particulièrement préférablement vaut 90°.

8. Outil de perçage (1) selon l'une quelconque des revendications précédentes, dans lequel les bagues de guidage (5) sont réalisées de telle sorte qu'une largeur de profilé (12) des bagues de guidage (5) soit comprise entre 20 % et 40 % de la longueur d'une unité de profilé (13).

9. Outil de perçage (1) selon l'une quelconque des revendications précédentes, dans lequel au moins un canal de refroidissement intérieur (9) est réalisé dans l'outil de perçage (1).
